# EUROPEAN PATENT SPECIFICATION

(11) **EP 4 475 321 B1**
(45) Date of publication and mention of the grant of the patent: **21.10.2026**
(21) Application number: 23746843.4
(22) Date of filing: 20.01.2023
(51) Int. Cl.: H01M 50/46, H01M 4/38, H01M 4/505, H01M 4/525, H01M 50/423, H01M 50/434, H01M 50/443, H01M 50/451

(54) **NONAQUEOUS ELECTROLYTE SECONDARY BATTERY**
SEKUNDÄRBATTERIE MIT NICHTWÄSSRIGEM ELEKTROLYTEN
BATTERIE SECONDAIRE À ÉLECTROLYTE NON AQUEUX

(30) Priority: 31.01.2022 JP 2022013447
(43) Date of publication of application: 11.12.2024
(73) Proprietor: Panasonic Energy Co., Ltd., Osaka 570-8511 (JP); Panasonic Holdings Corporation, Osaka, 571-8501 (JP); SSLM Co., Ltd., Daegu 42921 (KR)
(72) Inventor: MORISHIMA, Hideki, Kadoma-shi, Osaka 571-0057 (JP); IWAMOTO, Takuya, Kadoma-shi, Osaka 571-0057 (JP); TANI, Yuji, Kadoma-shi, Osaka 571-0057 (JP); HORIE, Kensaku, Niihama-shi, Ehime 792-0015 (JP)
(74) Representative: Novagraaf International SA
(86) International application number: PCT/JP2023/001633
(87) International publication number: WO 2023/145630

(56) References cited:
- WO-A1-2020/137561
- CN-A- 109 148 790
- JP-A- 2017 139 117
- JP-A- 2017 139 117
- JP-A- 2022 042 995

## Description

### TECHNICAL FIELD

The present disclosure relates to a non-aqueous electrolyte secondary battery.

### BACKGROUND ART

In recent years, non-aqueous electrolyte secondary batteries have been widely used as secondary batteries having high output and a high energy density. In the non-aqueous electrolyte secondary battery, lithium ions and the like move between a positive electrode and a negative electrode through a non-aqueous electrolyte to perform charge and discharge. The positive electrode and the negative electrode face each other with a separator sandwiched therebetween, and the separator separates the positive electrode from the negative electrode while immersing the non-aqueous electrolyte in an inside gap to penetrate the ions.

Patent Literature 1 describes that a lithium secondary battery comprising a negative electrode active material including a compound including at least one metal element selected from the group consisting of Si, Sn, Al, and Zn, and a first porous layer composed of a polyolefin and a second porous layer composed of a heat-resistant resin, can prevent abnormal heat generation due to short circuit between a negative electrode and a positive electrode.

### CITATION LIST

### PATENT LITERATURE

PATENT LITERATURE 1: International Publication No. WO2006/106782

### SUMMARY

In recent years, the non-aqueous electrolyte secondary battery has been required to have further higher capacity and improved reliability. Examples of a positive electrode active material having a high capacity include a lithium-nickel composite oxide. A lithium-nickel composite oxide having a higher content rate of Ni has a higher capacity. Examples of a negative electrode active material having a high capacity include a silicon material such as SiO.

However, increase in the content rate of Ni in the lithium-nickel composite oxide increases oxidizing power of the lithium-nickel composite oxide, and thereby side reactions occur on an interface between the positive electrode and the separator to tend to deteriorate charge-discharge cycle characteristics.

In addition, use of the silicon material such as SiO as the negative electrode active material increases expansion and contraction of the negative electrode during charge and discharge, which increases behavior of immersion and desorption of the electrolytic solution with the negative electrode. As a result, distribution of the amount of the electrolytic solution is generated on an interface between the negative electrode and the separator to tend to deteriorate charge-discharge cycle characteristics.

By using a separator having a filler layer including an aramid, which has an excellent oxidization inhibiting property, and disposing the filler layer so as to face the positive electrode, oxidation of the separator can be inhibited; however, there has been room for improvement to achieve both of the high capacity and the charge-discharge cycle characteristics in the non-aqueous electrolyte secondary battery using the aforementioned active materials having a high capacity.

It is an advantage of the present disclosure to provide a non-aqueous electrolyte secondary battery having a high capacity and excellent charge-discharge cycle characteristics. The subject matter of the present invention is defined by the appended claims.

A non-aqueous electrolyte secondary battery of an aspect of the present disclosure comprises: a positive electrode including a positive electrode active material; a negative electrode including a negative electrode active material; and a separator that separates the positive electrode from the negative electrode, wherein the positive electrode active material contains a lithium-transition metal composite oxide represented by the general formula LiₐNiₓCo_{y}M_{z}O_{2-b}, wherein 0.95≤a≤1.05, 0.80≤x≤0.95, 0≤y≤0.20, 0≤z≤0.20, 0≤b≤0.05, x+y+z=1, and M represents at least one element selected from the group consisting of Al, Mn, Fe, Ti, Si, Nb, Mo, W, and Zn, the negative electrode active material contains a silicon material at greater than or equal to 1 mass% based on a total mass of the negative electrode active material, the separator has a substrate layer and a filler layer formed on a surface of the substrate layer, the filler layer faces the positive electrode, and includes a resin comprising an amide bond and includes a filler, the resin comprising an amide bond includes: a block A having a unit composed of 4,4'-diphenylsulfonylterephthalamide as a main component; and a block B having a unit composed of paraphenyleneterephthalamide as a main component, the unit composed of 4,4'-diphenylsulfonylterephthalamide accounts for greater than or equal to 30% and less than or equal to 70% in all units, a content of the filler in the filler layer is greater than or equal to 20 mass% and less than or equal to 90 mass% based on a total mass of the filler layer, and when 1 µl of propylene carbonate is dropped on the filler layer, a contact angle after one second is less than or equal to 10°.

According to the non-aqueous electrolyte secondary battery of the present disclosure, an initial discharge capacity and the charge-discharge cycle characteristics may be improved.

### BRIEF DESCRIPTION OF DRAWING

FIG. 1 is a vertical sectional view of a cylindrical battery of an example of an embodiment.
FIG. 2 is a sectional view of a separator of an example of an embodiment.

### DESCRIPTION OF EMBODIMENTS

Hereinafter, an example of an embodiment of a non-aqueous electrolyte secondary battery according to the present disclosure will be described in detail with reference to the drawings. Hereinafter, a cylindrical battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The exterior is not limited to the cylindrical shape, and may be a rectangular exterior, a coin-shaped exterior, or the like, for example. The exterior may be a pouch composed of laminated sheets including a metal layer and a resin layer. In the following description, specific shapes, materials, values, directions, and the like, which are examples for facilitating understanding of the present disclosure, may be appropriately modified with specifications of non-aqueous electrolyte secondary batteries. The description " a numerical value (A) to a numerical value (B)" herein means greater than or equal to the value (A) and less than or equal to the value (B).

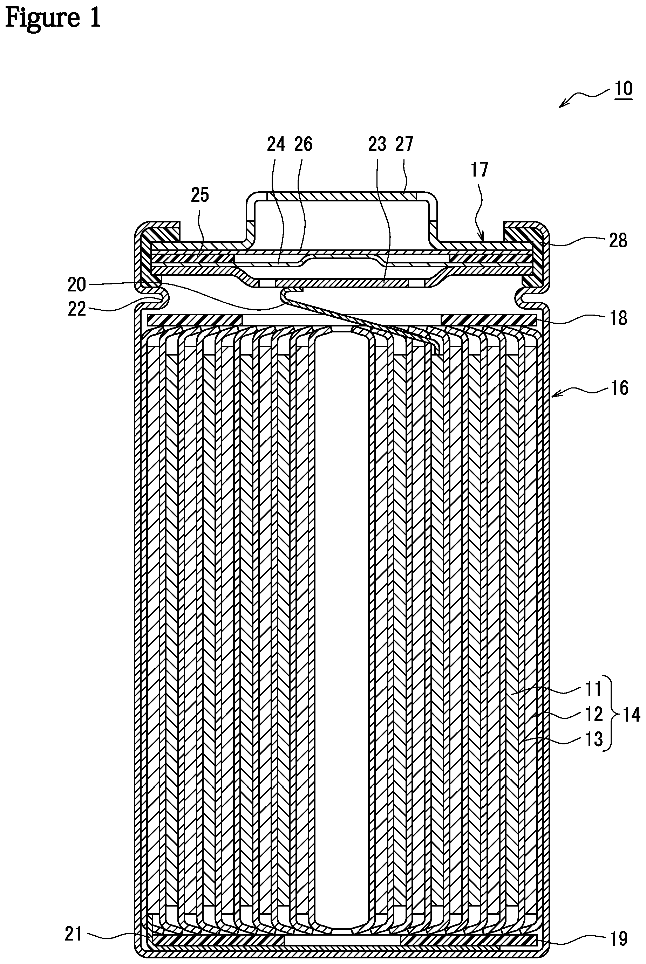

FIG. 1 is a vertical sectional view of a cylindrical battery 10 of an example of an embodiment. In the cylindrical battery 10 illustrated in FIG. 1, an electrode assembly 14 and an electrolytic solution (not illustrated) are housed in an exterior 16. Hereinafter, for convenience of description, a direction along an axial direction of the exterior 16 will be described as "the vertical direction or the upper-lower direction", a side of the sealing assembly 17 will be described as "the upper side", and a side of a bottom of the exterior 16 will be described as "the lower side".

As a non-aqueous solvent (organic solvent) of the electrolytic solution, carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As the esters, carbonate esters such as methyl acetate (MA) and methyl propionate (MP) are preferably used. The non-aqueous solvent may contain a halogen-substituted derivative in which hydrogen atoms of these solvents are at least partially substituted with a halogen atom such as fluorine. As the halogen-substituted derivative, fluoroethylene carbonate (FEC), methyl fluoropropionate (FMP), and the like are preferably used, for example. As an electrolyte salt in the electrolytic solution, LiPF₆, LiBF₄, LiCF₃SO₃, lithium bis(fluorosulfonyl)imide, lithium bis(trifluoromethanesulfonyl)imide, and the like, and a mixture thereof may be used. The amount of the electrolyte salt to be dissolved in the non-aqueous solvent is, for example, greater than or equal to 0.5 mol/L and less than or equal to 2.0 mol/L.

The electrode assembly 14 has a wound structure in which a band-shaped positive electrode 11 and negative electrode 12 are wound with a separator 13 interposed therebetween. The positive electrode 11, the negative electrode 12, and the separator 13 are all a band-shaped elongated body, and spirally wound to be alternately stacked in a radial direction of the electrode assembly 14. To prevent precipitation of lithium, the negative electrode 12 is formed to be one size larger than the positive electrode 11 in a longitudinal direction and a width direction (short direction). Two separators 13 are formed to be one size larger than the positive electrode 11 and the negative electrode 12, and disposed so as to sandwich the positive electrode 11. A positive electrode lead 20 is connected to a substantial center in the longitudinal direction of the positive electrode 11 by welding or the like, and a negative electrode lead 21 is connected to an end on an outside of winding of the negative electrode 12 by welding or the like.

Insulating plates 18 and 19 are disposed on an upper and lower sides of the electrode assembly 14, respectively. In the example illustrated in FIG. 1, the positive electrode lead 20 extends through a through hole of the insulating plate 18 toward a side of a sealing assembly 17, and the negative electrode lead 21 extends through an outside of the insulating plate 19 toward a bottom side of the exterior 16. The positive electrode lead 20 is connected to a lower face of the filter 23 of the sealing assembly 17 by welding or the like, and a cap 27, which is a top plate of the sealing assembly 17 electrically connected to the filter 23, becomes a positive electrode terminal. The negative electrode lead 21 is connected to a bottom inner face of the exterior 16 by welding or the like, and the exterior 16 becomes a negative electrode terminal.

As noted above, the exterior 16 is a bottomed cylindrical metallic container having an opening at one side in an axial direction. A gasket 28 is provided between the exterior 16 and the sealing assembly 17 to achieve sealability inside the battery and insulability between the exterior 16 and the sealing assembly 17. On the exterior 16, a grooved portion 22 in which a part of a side wall thereof projects inward for supporting the sealing assembly 17 is formed. The grooved portion 22 is preferably formed in a circular shape along a circumferential direction of the exterior 16, and supports the sealing assembly 17 with the upper surface thereof. The sealing assembly 17 is fixed on the upper part of the exterior 16 with the grooved portion 22 and with an end of the opening of the exterior 16 caulked to the sealing assembly 17.

The sealing assembly 17 has a structure in which the filter 23, a lower vent member 24, an insulating member 25, an upper vent member 26, and the cap 27 are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts thereof. If the battery causes abnormality to increase the internal pressure, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the opening of the cap 27.

Hereinafter, the positive electrode 11, the negative electrode 12, and the separator 13, which constitute the electrode assembly 14, particularly the separator 13, will be described in detail.

### [Positive Electrode]

The positive electrode 11 has, for example, a positive electrode current collector and a positive electrode mixture layer formed on a surface of the positive electrode current collector. For the positive electrode current collector, a foil of a metal stable within a potential range of the positive electrode, such as aluminum, a film in which such a metal is disposed on a surface layer, or the like may be used. A thickness of the positive electrode current collector is, for example, greater than or equal to 10 µm and less than or equal to 30 µm.

The positive electrode mixture layer is preferably formed on both surfaces of the positive electrode current collector. A thickness of the positive electrode mixture layer is, for example, greater than or equal to 10 µm and less than or equal to 150 µm on one side of the positive electrode current collector. The positive electrode mixture layer includes, for example, a positive electrode active material, a conductive agent, and a binder. A content of the positive electrode active material in the positive electrode mixture layer is, for example, greater than or equal to 80 mass% and less than or equal to 99 mass% based on the total mass of the positive electrode mixture layer. The positive electrode may be produced by, for example, applying a positive electrode mixture slurry including the positive electrode active material, the conductive agent, the binder, and the like on both the surfaces of the positive electrode current collector, drying the coating, and subsequently rolling the coating by using a roller or the like.

The positive electrode active material included in the positive electrode mixture layer contains a lithium-transition metal composite oxide represented by the general formula LiₐNiₓCo_{y}M_{z}O_{2-b}, wherein 0.95≤a≤1.05, 0.80≤x≤0.95, 0≤y≤0.20, 0≤z≤0.20, 0≤b≤0.05, x+y+z=1, and M represents at least one element selected from the group consisting of Al, Mn, Fe, Ti, Si, Nb, Mo, W, and Zn.

"a", which indicates the number of moles of Li per mole of the lithium-transition metal composite oxide, represents greater than or equal to 0.95 and less than or equal to 1.05, and preferably 1. If "a" represents less than 0.95, the battery capacity may decrease compared with a case where "a" satisfies the above range. If "a" represents greater than 1.05, the charge-discharge cycle characteristics may be deteriorated compared with a case where "a" satisfies the above range.

"x", which indicates a proportion of Ni (Ni content rate) relative to the total number of moles of metal elements in the lithium-transition metal composite oxide excluding Li, represents greater than or equal to 0.80 and less than or equal to 0.95, and preferably greater than or equal to 0.87 and less than or equal to 0.95. This may increase the battery capacity. Although a lithium-transition metal composite oxide having a higher Ni content rate increases the capacity, the separator tends to be oxidized. The oxidation of the separator 13 may be inhibited by a filler layer 32 in the separator 13, described later.

In the lithium-transition metal composite oxide, Co is an optional component. "y", which indicates a proportion of Co relative to the total number of moles of metal elements in the lithium-transition metal composite oxide excluding Li, represents greater than or equal to 0 and less than or equal to 0.20. Since Co has high electron conductivity, Co may reduce resistance.

"z", which indicates a proportion of M (M represents at least one element selected from the group consisting of Al, Mn, Fe, Ti, Si, Nb, Mo, W, and Zn) relative to the total number of moles of metal elements in the lithium-transition metal composite oxide excluding Li, represents greater than or equal to 0 and less than or equal to 0.20. For example, Al and Mn may stabilize the crystal structure of the positive electrode active material.

The positive electrode mixture layer may include a positive electrode active material other than the above lithium-transition metal composite oxide. Examples of the other positive electrode active material include a lithium-containing composite oxide having a Ni content rate of greater than or equal to 0 mol% and less than 80 mol%.

Examples of the conductive agent included in the positive electrode mixture layer include carbon-based particles such as carbon black (CB), acetylene black (AB), Ketjenblack, carbon nanotube (CNT), graphene, and graphite. These may be used singly, or in combination of two or more.

Examples of the binder included in the positive electrode mixture layer include fluororesins such as polytetrafluoroethylene (PTFE) and polyvinylidene fluoride (PVDF), polyacrylonitrile (PAN), polyimide resins, acrylic resins, and polyolefin resins. These may be used singly, or in combination of two or more.

### [Negative Electrode]

The negative electrode 12 has, for example, a negative electrode current collector and a negative electrode mixture layer formed on a surface of the negative electrode current collector. For the negative electrode current collector, a foil of a metal stable within a potential range of the negative electrode, such as copper, a film in which such a metal is disposed on a surface layer, or the like may be used. A thickness of the negative electrode current collector is, for example, greater than or equal to 5 µm and less than or equal to 30 µm.

The negative electrode mixture layer is preferably formed on both surfaces of the negative electrode current collector. A thickness of the negative electrode mixture layer is, for example, greater than or equal to 10 µm and less than or equal to 150 µm on one side of the negative electrode current collector. The negative electrode mixture layer includes, for example, a negative electrode active material and a binder. A content of the negative electrode active material in the negative electrode mixture layer is, for example, greater than or equal to 80 mass% and less than or equal to 99 mass% based on the total mass of the negative electrode mixture layer. The negative electrode may be produced by, for example, applying a negative electrode mixture slurry including the negative electrode active material, the binder, and the like on both the surfaces of the negative electrode current collector, drying the coating, and subsequently rolling the coating by using a roller or the like.

The negative electrode active material included in the negative electrode mixture layer is not particularly limited as long as it may reversibly occlude and release lithium ions, and a carbon material such as graphite is typically used. The graphite may be any of: a natural graphite such as flake graphite, massive graphite, and amorphous graphite; and an artificial graphite such as massive artificial graphite and graphitized mesophasecarbon microbead.

For the negative electrode active material, a carbon material such as graphite and a silicon material are used in combination, for example. The negative electrode active material contains, for example, the silicon material at greater than or equal to 1 mass% relative to the total mass of the negative electrode active material. This may further increase the battery capacity. Since the silicon material has a large proportion of expansion during charge, the positive electrode 11 and the separator 13 easily approach each other, which tends to oxidize the separator 13. Thus, an effect by a filler layer 32 in the separator 13, described later, becomes remarkable. An upper limit of the content of the silicon material is, for example, 20 mass% relative to the total mass of the negative electrode active material. Examples of the silicon material include Si, an alloy including Si, a silicon oxide represented by SiOₓ ("x" represents greater than or equal to 0.5 and less than or equal to 1.6), a silicon-containing material in which Si fine particles are dispersed in a lithium silicate phase represented by Li_{2y}SiO_{(2+y)} (0<y<2), and a silicon-containing material in which Si fine particles are dispersed in a carbon phase.

Examples of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These materials may be used singly, or in combination of two or more.

### [Separator]

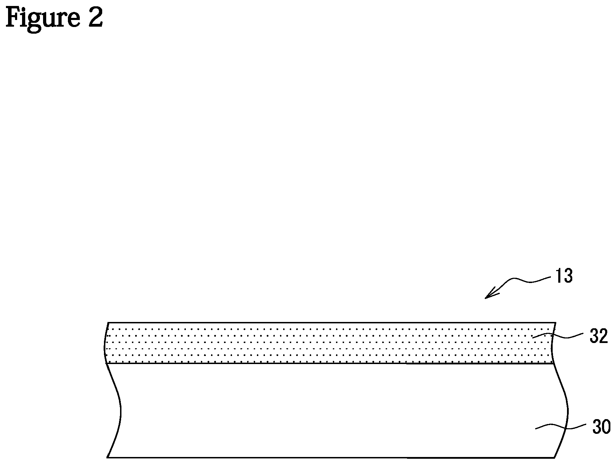

The separator 13 separates the positive electrode 11 from the negative electrode 12. FIG. 2 is a sectional view of the separator 13 of an example of an embodiment. In FIG. 2, the positive electrode 11 is disposed on the upper side of the separator 13, and the negative electrode 12 is disposed on the lower side.

As illustrated in FIG. 2, the separator 13 has a substrate layer 30 and a filler layer 32 formed on one surface of the substrate layer 30. In the electrode assembly 14, the filler layer 32 faces the positive electrode 11, and the substrate layer 30 faces the negative electrode 12.

For the substrate layer 30, a porous sheet having an ion permeation property and an insulation property is used, for example. Specific examples of the porous sheet include a fine porous thin film, a woven fabric, and a nonwoven fabric. Examples of a material of the substrate layer 30 include polyolefins such as polyethylene, polypropylene, and a copolymer of ethylene and an α-olefin, acrylic resins, polystyrene, polyesters, and cellulose. A thickness of the substrate layer 30 is, for example, greater than or equal to 5 µm and less than or equal to 50 µm.

The filler layer 32 includes a resin comprising an amide bond and includes a filler. The filler layer 32 faces the positive electrode 11, and inhibits oxidation of the separator 13. A thickness of the filler layer 32 is, for example, greater than or equal to 1 µm and less than or equal to 10 µm.

A content of the filler in the filler layer 32 is greater than or equal to 20 mass% and less than or less than or equal to 90 mass%, and preferably greater than or equal to 30 mass% and less than or less than or equal to 70 mass% based on the total mass of the filler layer 32. This improves permeability of the electrolytic solution.

A melting point or a thermal softening point of the filler included in the filler layer 32 is preferably greater than or equal to 150°C, and more preferably greater than or equal to 200°C. Examples of the filler include metal oxide particles, metal nitride particles, metal fluoride particles, metal carbide particles, and sulfide particles. Examples of the metal oxide particles include aluminum oxide (for example, α-Al₂O₃), titanium oxide, magnesium oxide, zirconium oxide, nickel oxide, silicon oxide, and manganese oxide. Examples of the metal nitride oxide particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide. Examples of the sulfide particles include barium sulfate. The filler may also be porous aluminosilicate salts such as zeolite (M_{2/n}O·Al₂O₃·xSiO₂·yH₂O, M represents a metal element, x≥2, and y≥0), layered silicate salts such as talc (Mg₃Si₄O₁₀(OH)₂), and minerals such as barium titanate (BaTiO₃) and strontium titanate (SrTiO₃). These may be used singly, or in combination of two or more.

The resin comprising an amide bond included in the filler layer 32 includes: a block A having a unit composed of 4,4'-diphenylsulfonylterephthalamide as a main component; and a block B having a unit composed of paraphenyleneterephthalamide as a main component. The unit composed of 4,4'-diphenylsulfonylterephthalamide accounts for greater than or equal to 30% and less than or equal to 70% in all units.

When 1 µl of propylene carbonate is dropped on the filler layer 32, a contact angle after one second is less than or equal to 10°. This improves permeability of the electrolytic solution into the separator 13, and thereby the electrolytic solution smoothly circulates inside the battery to improve the charge-discharge cycle characteristics. The contact angle of propylene carbonate on the surface of the filler layer 32 varies depending on an inside structure of the filler layer 32. The inside structure of the filler layer 32 may be controlled by, for example, a composition of the resin comprising an amide bond, a moisture proportion in synthesizing the resin comprising an amide bond, the content of the filler, and the like.

The contact angle may be measured in the following procedure.
(1) The unused filler layer 32 of the separator 13 is fixed on a sample stage with directing the filler layer 32 side upward.
(2) The measurement is performed by using OCA25, manufactured by Data Physics Instruments GmbH. First, a data-acquisition interval is set to 75 points per second (fps 75).
(3) On the filler layer 32 side of the separator 13, 1 µl of propylene carbonate is dropped, and the contact angle after one second is measured.

### EXAMPLES

Hereinafter, the present disclosure will be further described with Examples, but the present disclosure is not limited to these Examples.

### <Example 1>

### [Production of Positive Electrode]

As a positive electrode active material, aluminum-containing lithium nickel cobaltate represented by LiNi_{0.82}Co_{0.15}Al_{0.03}O₂ was used. 94 parts by mass of a positive electrode active material, 3 parts by mass of acetylene black, and 3 parts by mass of polyvinylidene fluoride (PVDF) were mixed, and an appropriate amount of N-methyl-2-pyrrolidone (NMP) was added to prepare a positive electrode mixture slurry. Then, this positive electrode mixture slurry was applied to both surfaces of a band-shaped positive electrode current collector made of aluminum foil, the coating was dried and subsequently rolled, and cut to a predetermined electrode size to produce a positive electrode in which positive electrode mixture layers were formed on both the surfaces of the positive electrode current collector. On a substantial center in a longitudinal direction of the positive electrode, a positive electrode exposed portion where the mixture layer was absent and the current collector surface was exposed was provided, and a positive electrode lead made of aluminum was welded with the positive electrode exposed portion.

### [Production of Negative Electrode]

As a negative electrode active material, a mixture of 99 parts by mass of artificial graphite and 1 part by mass of silicon oxide (SiO) was used. Mixing 100 parts by mass of this mixture, 1 part by mass of carboxymethylcellulose (CMC), and 1 part by mass of styrene-butadiene rubber (SBR) was performed, and an appropriate amount of water was added to prepare a negative electrode mixture slurry. Then, this negative electrode mixture slurry was applied to both surfaces of a band-shaped negative electrode current collector made of copper foil, the coating was dried and subsequently rolled, and cut to a predetermined electrode size to produce a negative electrode in which negative electrode mixture layers were formed on both the surfaces of the negative electrode current collector. On an end on an outside of winding of the negative electrode, a negative electrode exposed portion where the mixture layer was absent and the current collector surface was exposed was provided, and a negative electrode lead made of nickel was welded with the negative electrode exposed portion.

### [Production of Separator]

A composition was prepared by a method including the following steps (a) to (g).
(a) A 5-L separable flask equipped with a stirring blade, a thermometer, a nitrogenintroducing tube, and a powder-adding port was sufficiently dried.
(b) 4217 g of NMP was loaded into the flask. Further, 324.22 g of calcium chloride (which had been dried at 200°C for 2 hours) was added, and the mixture was heated to 100°C for completely dissolving calcium chloride to obtain a solution of calcium chloride. Here, the solution of calcium chloride was adjusted to have a concentration of calcium chloride of 7.14 mass% and a moisture proportion of 400 ppm.
(c) To the solution of calcium chloride, 140.66 g of 4,4'-diaminodiphenyl sulfone (DDS) was added while keeping the temperature at 100°C for completely dissolving DDS to obtain a solution A.
(d) The obtained solution A was cooled to 25°C. Thereafter, total 114.06 g of terephthalic dichloride (TPC) was added separately three times to the cooled solution A in a state of keeping the temperature at 25°C, and a reaction was performed for 1 hour to obtain a reaction solution A. A loading ratio in the reaction solution A, which was a mole ratio of DDS/TPC added to the solution A, was 1.0083. In the reaction solution A, a block A composed of poly(4,4'-diphenylsulfonylterephthalamide) was prepared.
(e) To the obtained reaction solution A, 61.260 g of paraphenylenediamine (PPD) was added and completely dissolved over 1 hour to obtain a solution B.
(f) To the solution B, total 113.88 g of TPC was added separately three times in a state of keeping the temperature at 25°C, and a reaction was performed for 1.5 hours to obtain a reaction solution B. A loading ratio in the reaction solution B, which was a mole ratio of PPD/TPC added to the solution B, was 1.0099. In the reaction solution B, a block B composed of poly(paraphenyleneterephthalamide) extended at both the sides of the block A.
(g) The reaction solution B was aged for 1 hour in a state of keeping the temperature at 25°C. Thereafter, the solution was stirred under a reduced pressure for 1 hour to remove bubbles. As a result, a solution was obtained that includes a block copolymer (1) having the block A at 50% of the entire molecule and the block B at the remaining 50% of the entire molecule. That is, the unit composed of 4,4'-diphenylsulfonylterephthalamide accounted for 50% in all the units. The block copolymer (1) is a resin comprising an amide bond and a bond other than the amide bond.

To total 100 parts by mass of the resin included in the solution obtained above, 100 parts by mass of aluminum oxide (average particle diameter: 0.013 µm) was added. The obtained mixture was diluted with NMP, and uniformly dispersed with a pressure-type dispersing apparatus to form an applying liquid (1). The applying liquid (1) had a solidcontent concentration of 5 mass%. The applying liquid (1) was applied on a polyethylene porous film (thickness: 10 µm), and treated in an oven at 50°C and a humidity of 70% for 2 minutes to form a porous layer (1). Thereafter, the porous layer (1) was washed with water and dried to obtain a laminate separator (1) comprising the porous layer (1). The laminate separator (1) had a film thickness of 13 µm. Thereafter, slits were formed to produce two separators A having a predetermined size. The filler layer had a contact angle of 10°.

### [Production of Electrolytic Solution]

To 100 parts by mass of a mixed solvent composed of ethylene carbonate (EC), ethyl methyl carbonate (EMC), and dimethyl carbonate (DMC) (EC:EMC:DMC=2:2:6 at a volume ratio), 2 parts by mass of vinylene carbonate (VC) was added. Into this mixed solvent, LiPF₆ was dissolved so that the concentration was 1.0 mol/L to prepare an electrolytic solution.

### [Production of Secondary Battery]

The positive electrode and the negative electrode were spirally wound with the separator interposed therebetween to produce a wound electrode assembly. At this time, the filler layer in the separator faced the positive electrode. Insulating plates were respectively disposed on upper and lower sides of the electrode assembly, and the electrode assembly was housed in an exterior housing can. A negative electrode lead was welded with a bottom of a bottomed cylindrical exterior housing can, and a positive electrode lead was welded with a sealing assembly. The electrolytic solution was injected into the exterior housing can, and an opening of the exterior housing can was sealed with the sealing assembly via a gasket to produce a secondary battery.

### [Evaluation of Initial Discharge Capacity]

Under an environment at 25°C, the secondary battery was charged at a constant current of 0.3 C until a battery voltage reached 4.2 V, and then charged at a constant voltage of 4.2 V until a current value reached 0.02 C. Thereafter, the secondary battery was discharged at a constant current of 0.5 C until the battery voltage reached 2.5 V, and a discharge capacity at this time was specified as an initial discharge capacity.

### [Evaluation of Discharge Capacity after Cycle Test]

Under an environment at 45°C, the secondary battery after the evaluation of the initial discharge capacity was charged at a constant current of 0.3 C until a battery voltage reached 4.2 V, and then charged at a constant voltage of 4.2 V until a current value reached 0.02 C. Thereafter, the secondary battery was left to stand for 12 hours, and then discharged at a constant current of 0.5 C until the battery voltage reached 2.5 V. This charge and discharge were specified as one cycle, the charge and discharge were performed with 200 cycles, and a discharge capacity at the 200th cycle was specified as a discharge capacity after the cycle test.

### <Example 2>

A secondary battery was produced and evaluated in the same manner as in Example 1 except that, in the preparation of the composition for producing the separator, a separator B was produced by changing the following points. In the obtained resin, the unit composed of 4,4'-diphenylsulfonylterephthalamide accounted for 50% in all the units. The filler layer had a contact angle of 5°.
(1) In the step (b), the amount of NMP used was changed to 4177 g, and the amount of calcium chloride used was changed to 366.29 g to adjust the moisture proportion to 300 ppm.
(2) In the step (d), the amount of TPC used was changed so that the loading ratio in the reaction solution A was 1.016.
(3) In the step (f), the amount of TPC used was changed so that the loading ratio in the reaction solution B was 1.018.

### <Example 3>

A secondary battery was produced and evaluated in the same manner as in Example 2 except that, in the production of the positive electrode, aluminum-containing lithium nickel cobaltate represented by LiNi_{0.87}Co_{0.10}Al_{0.03}O₂ was used as the positive electrode active material.

### <Example 4>

A secondary battery was produced and evaluated in the same manner as in Example 2 except that, in the production of the positive electrode, aluminum-containing lithium nickel cobaltate represented by LiNi_{0.01}Co_{0.06}Al_{0.03}O₂ was used as the positive electrode active material.

### <Example 5>

A secondary battery was produced and evaluated in the same manner as in Example 4 except that, in the production of the negative electrode, a mixture of 97 parts by mass of artificial graphite and 3 parts by mass of SiO was used as the negative electrode active material.

### <Comparative Example 1>

A secondary battery was produced and evaluated in the same manner as in Example 1 except that, in the preparation of the composition for producing the separator, a separator C was produced by changing the following points. In the obtained resin, the unit composed of 4,4'-diphenylsulfonylterephthalamide accounted for 50% in all the units. The filler layer had a contact angle of 15°.
(1) In the step (b), the moisture proportion was adjusted to 500 ppm.
(2) In the step (c), the amount of DDS used was changed to 151.559 g.
(3) In the step (d), the amount of TPC used was changed to 123.304 g.
(4) In the step (e), the amount of PPD used was changed to 66.007 g.
(5) In the step (f), the amount of TPC used was changed to 123.059 g.

### <Comparative Example 2>

A secondary battery was produced and evaluated in the same manner as in Example 1 except that, in the production of the separator, a composition was prepared to produce a separator D by a method including the following steps (a) to (e). The filler layer had a contact angle of 13°.
(a) A 5-L separable flask having a stirring blade, a thermometer, a nitrogenintroducing tube, and a powder-adding port was sufficiently dried.
(b) 4280 g of NMP was loaded into the flask. Further, 329.12 g of calcium chloride (which had been dried at 100°C for 2 hours) was added, and the mixture was heated to 100°C for completely dissolving calcium chloride to obtain a solution of calcium chloride. Here, the solution of calcium chloride was adjusted to have a concentration of calcium chloride of 7.14 mass% and a moisture proportion of 450 ppm.
(c) To the solution of calcium chloride, 138.932 g of paraphenylenediamine (PPD) was added for completely dissolving PPD over 1 hour to obtain a solution A.
(d) Total 251.499 g of TPC was added separately three times to the solution A in a state of keeping the temperature at 25°C, and a reaction was performed for 1.5 hours to obtain a reaction solution B. A loading ratio in the reaction solution B, which was a mole ratio of PPD/TPC added to the solution B, was 1.0371.
(e) The reaction solution B was aged for 1 hour in a state of keeping the temperature at 25°C. Thereafter, the solution was stirred under a reduced pressure for 1 hour to remove bubbles. As a result, a solution was obtained that includes a comparative polymer (2) composed of poly(paraphenyleneterephthalamide).

### <Comparative Example 3>

A secondary battery was produced and evaluated in the same manner as in Example 1 except that, in the production of the negative electrode, only artificial graphite was used as the negative electrode active material.

### <Comparative Example 4>

A secondary battery was produced and evaluated in the same manner as in Comparative Example 3 except that the separator D produced in Comparative Example 2 was used as the separator.

### <Comparative Example 5>

A secondary battery was produced and evaluated in the same manner as in Example 1 except that, in the production of the positive electrode, aluminum-containing lithium nickel cobaltate represented by LiNi_{0.75}Co_{0.22}Al_{0.03}O₂ was used as the positive electrode active material.

### <Comparative Example 6>

A secondary battery was produced and evaluated in the same manner as in Comparative Example 5 except that, in the production of the negative electrode, only artificial graphite was used as the negative electrode active material.

### <Comparative Example 7>

A secondary battery was produced and evaluated in the same manner as in Comparative Example 6 except that the separator D produced in Comparative Example 2 was used as the separator.

Table 1 shows the evaluation results of the secondary batteries according to Examples and Comparative Examples. In Table 1, the initial discharge capacities and the discharge capacities after the cycle test are values relative to each of the initial discharge capacity and the discharge capacity after the cycle test of Comparative Example 7 being 100. Table 1 also shows the composition of the lithium-transition metal composite oxide, the content of SiO in the negative electrode, and the type and the contact angle of the separator.

**[Table 1]**

| | Positive electrode | Negative electrode | Separator | | Evaluation results | |
|---|---|---|---|---|---|---|
| | Lithium-transition metal composite oxide | SiO content [mass%] | Type | Contact angle [°] | Initial discharge capacity | Discharge capacity after cycle test |
| Example 1 | LiNi_{0.82}Co_{0.15}Al_{0.03}O₂ | 1 | A | 10 | 104.0 | 103.3 |
| Example 2 | LiNi_{0.82}Co_{0.15}Al_{0.03}O₂ | 1 | B | 5 | 104.0 | 107.7 |
| Example 3 | LiNi_{0.87}Co_{0.10}Al_{0.03}O₂ | 1 | B | 5 | 105.5 | 108.5 |
| Example 4 | LiNi_{0.91}Co_{0.06}Al_{0.03}O₂ | 1 | B | 5 | 106.5 | 109.6 |
| Example 5 | LiNi_{0.91}Co_{0.06}Al_{0.03}O₂ | 3 | B | 5 | 109.5 | 110.5 |
| Comparative Example 1 | LiNi_{0.82}Co_{0.15}Al_{0.03}O₂ | 1 | C | 15 | 104.0 | 91.2 |
| Comparative Example 2 | LiNi_{0.82}Co_{0.15}Al_{0.03}O₂ | 1 | D | 13 | 104.0 | 88.2 |
| Comparative Example 3 | LiNi_{0.82}Co_{0.15}Al_{0.03}O₂ | 0 | A | 10 | 102.5 | 101.9 |
| Comparative Example 4 | LiNi_{0.82}Co_{0.15}Al_{0.03}O₂ | 0 | D | 13 | 102.5 | 96.4 |
| Comparative Example 5 | LiNi_{0.75}Co_{0.22}Al_{0.03}O₂ | 1 | A | 10 | 101.5 | 100.9 |
| Comparative Example 6 | LiNi_{0.75}Co_{0.22}Al_{0.03}O₂ | 0 | A | 10 | 100.0 | 100.6 |
| Comparative Example 7 | LiNi_{0.75}Co_{0.22}Al_{0.03}O₂ | 0 | D | 13 | 100 | 100 |

The secondary batteries of Examples have a higher initial discharge capacity and a higher discharge capacity after the cycle test. Particularly, the secondary batteries of Examples 2 to 5 use the separator having a smaller contact angle of the filler layer than that of the secondary battery of Example 1, and thereby the charge-discharge cycle characteristics are improved. Meanwhile, the secondary batteries of Comparative Examples have either a small initial discharge capacity or a small discharge capacity after the cycle test.

### REFERENCE SIGNS LIST

10 Cylindrical battery, 11 Positive electrode, 12 Negative electrode, 13 Separator, 14 Electrode assembly, 16 Exterior, 17 Sealing assembly, 18, 19 Insulating plate, 20 Positive electrode lead, 21 Negative electrode lead, 22 Grooved portion, 23 Filter, 24 Lower vent member, 25 Insulating member, 26 Upper vent member, 27 Cap, 28 Gasket, 30 Substrate layer, 32 Filler layer

## Claims

1. A non-aqueous electrolyte secondary battery (10), comprising:
a positive electrode (11) including a positive electrode active material;
a negative electrode (12) including a negative electrode active material; and
a separator (13) that separates the positive electrode (11) from the negative electrode (12), wherein
the positive electrode active material contains a lithium-transition metal composite oxide represented by the general formula LiₐNiₓCo_{y}M_{z}O_{2-b}, wherein 0.95≤a≤1.05, 0.80≤x≤0.95, 0≤y≤0.20, 0≤z≤0.20, 0≤b≤0.05, x+y+z=1, and M represents at least one element selected from the group consisting of Al, Mn, Fe, Ti, Si, Nb, Mo, W, and Zn,
the negative electrode active material contains a silicon material at greater than or equal to 1 mass% based on a total mass of the negative electrode active material,
the separator (13) has a substrate layer (30) and a filler layer (32) formed on a surface of the substrate layer (30),
the filler layer (32) faces the positive electrode (11), and includes a resin comprising an amide bond and includes a filler,
the resin comprising an amide bond includes:
a block A having a unit composed of 4,4'-diphenylsulfonylterephthalamide as a main component; and
a block B having a unit composed of paraphenyleneterephthalamide as a main component,
the unit composed of 4,4'-diphenylsulfonylterephthalamide accounts for greater than or equal to 30% and less than or equal to 70% in all units,
a content of the filler in the filler layer (32) is greater than or equal to 20 mass% and less than or equal to 90 mass% based on a total mass of the filler layer (32), and
when 1 µl of propylene carbonate is dropped on the filler layer (32), a contact angle after one second is less than or equal to 10°.

2. The non-aqueous electrolyte secondary battery (10) according to claim 1, wherein "x" in the general formula satisfies 0.87≤x≤0.95.

## Patentansprüche

1. Sekundärbatterie mit nichtwässrigem Elektrolyt (10), umfassend:
eine positive Elektrode (11), die ein positives Elektrodenaktivmaterial enthält;
eine negative Elektrode (12), die ein negatives Elektrodenaktivmaterial enthält; und
einen Separator (13), der die positive Elektrode (11) von der negativen Elektrode (12) trennt,
wobei
das positive Elektrodenaktivmaterial ein Lithium-Übergangsmetall-Verbundoxid enthält, das durch die allgemeine Formel LiₐNiₓCo_{y}M_{z}O_{2-b} dargestellt wird, wobei 0,95≤a≤1,05, 0,80≤x≤0,95, 0≤y≤0,20, 0≤z≤0,20, 0≤b≤0,05, x+y+z=1, und M mindestens ein Element darstellt, ausgewählt aus der Gruppe bestehend aus Al, Mn, Fe, Ti, Si, Nb, Mo, W und Zn,
das negative Elektrodenaktivmaterial ein Siliciummaterial in einem Anteil von größer oder gleich 1 Massen-% bezogen auf eine Gesamtmasse des negativen Elektrodenaktivmaterials enthält,
der Separator (13) eine Substratschicht (30) und eine auf einer Oberfläche der Substratschicht (30) gebildete Füllstoffschicht (32) aufweist,
die Füllstoffschicht (32) der positiven Elektrode (11) zugewandt ist und ein Harz, das eine Amidbindung umfasst, und einen Füllstoff umfasst,
das Harz, das eine Amidbindung umfasst, umfasst:
einen Block A mit einer Einheit, die aus 4,4'-Diphenylsulfonylterephthalamid als Hauptbestandteil zusammengesetzt ist; und
einen Block B mit einer Einheit, die aus Paraphenylenterephthalamid als Hauptbestandteil zusammengesetzt ist,
die aus 4,4'-Diphenylsulfonylterephthalamid zusammengesetzte Einheit größer oder gleich 30 % und kleiner oder gleich 70 % in allen Einheiten ausmacht,
ein Gehalt des Füllstoffs in der Füllstoffschicht (32) größer oder gleich 20 Massen-% und kleiner oder gleich 90 Massen-% bezogen auf eine Gesamtmasse der Füllstoffschicht (32) ist, und
wenn 1 µl Propylencarbonat auf die Füllstoffschicht (32) getropft wird, ein Kontaktwinkel nach einer Sekunde kleiner oder gleich 10° ist.

2. Sekundärbatterie mit nichtwässrigem Elektrolyt (10) nach Anspruch 1, wobei "x" in der allgemeinen Formel 0,87≤x≤0,95 erfüllt.

## Revendications

1. Batterie secondaire à électrolyte non aqueux (10), comprenant :
une électrode positive (11) comprenant un matériau actif d'électrode positive ;
une électrode négative (12) comprenant un matériau actif d'électrode négative ; et
un séparateur (13) qui sépare l'électrode positive (11) de l'électrode négative (12), dans laquelle
le matériau actif d'électrode positive contient un oxyde composite lithium-métal de transition représenté par la formule générale LiₐNiₓCo_{y}M_{z}O_{2-b}, dans laquelle 0,95≤a≤1,05, 0,80≤x≤0,95, 0≤y≤0,20, 0≤z≤0,20, 0≤b≤0,05, x+y+z=1, et M représente au moins un élément choisi dans le groupe constitué de Al, Mn, Fe, Ti, Si, Nb, Mo, W et Zn,
le matériau actif d'électrode négative contient un matériau à base de silicium à raison supérieure ou égale à 1 % en masse sur la base d'une masse totale du matériau actif d'électrode négative,
le séparateur (13) présente une couche de substrat (30) et une couche de charge (32) formée sur une surface de la couche de substrat (30),
la couche de charge (32) fait face à l'électrode positive (11), et comprend une résine comprenant une liaison amide et comprend une charge,
la résine comprenant une liaison amide comprend :
un bloc A ayant une unité composée de 4,4'-diphénylsulfonyltéréphtalamide comme composant principal ; et
un bloc B ayant une unité composée de para-phénylènetéréphtalamide comme composant principal,
l'unité composée de 4,4'-diphénylsulfonyltéréphtalamide représente une proportion supérieure ou égale à 30 % et inférieure ou égale à 70 % dans toutes les unités,
une teneur de la charge dans la couche de charge (32) est supérieure ou égale à 20 % en masse et inférieure ou égale à 90 % en masse sur la base d'une masse totale de la couche de charge (32), et
lorsque 1 µl de carbonate de propylène est déposé sur la couche de charge (32), un angle de contact après une seconde est inférieur ou égal à 10°.

2. Batterie secondaire à électrolyte non aqueux (10) selon la revendication 1, dans laquelle « x » dans la formule générale satisfait 0,87≤x≤0,95.
